(19) Europäisches Patentamt

European Patent Office

Office européen des brevets

(11) Veröffentlichungsnummer : **0 117 840**
**B1**

(12)

# EUROPÄISCHE PATENTSCHRIFT

(45) Veröffentlichungstag der Patentschrift :
15.06.88

(21) Anmeldenummer : 84810016.0

(22) Anmeldetag : 11.01.84

(51) Int. Cl.⁴ : **B 60 R 13/00,** G 09 F 7/22,
**B 60 R 13/02**

(54) Halter für ein rotierendes Emblem an einem Kraftfahrzeug.

(30) Priorität : 17.02.83 CH 878/83

(43) Veröffentlichungstag der Anmeldung :
05.09.84 Patentblatt 84/36

(45) Bekanntmachung des Hinweises auf die Patenterteilung : 15.06.88 Patentblatt 88/24

(84) Benannte Vertragsstaaten :
AT BE DE FR GB IT LU NL SE

(56) Entgegenhaltungen :
BE-A- 547 389
DE-A- 2 338 996
DE-U- 1 742 282
FR-A- 1 204 813

(73) Patentinhaber : Kaiser, Elmar
6 Route de Meyrin
CH-1202 Genève (CH)

(72) Erfinder : Kaiser, Elmar
6 Route de Meyrin
CH-1202 Genève (CH)

EP 0 117 840 B1

## Beschreibung

Die Erfindung betrifft die Anordnung eines Publikationsständers mit einem Publikationsaufsatz und einer Befestigungsvorrichtung für den Publikationsaufsatz auf einem Karosserieteil eines Fahrzeugs, gemäß dem Oberbegriff des Patentanspruchs 1.

Ein solcher Publikationsständer ist aus der DE-A-2 338 996 bekannt.

Publikationsständer sind bei Kraftfahrzeugen, insbesondere bei Personenautos seit langem bekannt und dienen der besonderen Exponierung von Emblemen oder Skulpturen, welche einer bestimmten Automarke zugeordnet sind. Ein Beispiel hierfür ist der Mercedesstern.

Alle diese bekannten Publikationsständer, welche von verschiedenen Autoherstellern in unterschiedlicher Ausführung benützt werden, haben eines gemeinsam, dass sie im normalen Zustand unbeweglich sind. Aus der DE-A-2 338 996 ist eine Anordnung eines im Wind rotierenden Publikationsständers bekannt, der baulich kompliziert ist, weil besondere aerodynamische Formen für den Publikationsaufsatz und Publikationsträger nötig sind.

Aufgabe der vorliegenden Anmeldung ist es, eine Anordnung eines in Wind rotierenden Publikationsständers bereitzustellen, die baulich einfacher ist und keine aerodynamische Formen aufweist.

Zur Lösung dieser Aufgabe sind die im kennzeichnenden Teil des Anspruchs 1 gestellten Merkmale vorgesehen. Der Publikationsträger kann hierbei Achsen aufweisen, welche in Kugellagern, die an der Rahmeneinrichtung zentriert angeordnet sind, geführt sind.

Der Publikationsaufsatz kann mittels einer Feder kraftschlüssig mit einem Karosserieteil des Fahrzeuges verbunden sein, um bei eventuell auftretenden Stössen gegen ihn ausweichen zu können.

Beim Aufsetzen des Publikationsträgers auf schräge Autoteile können Kompensationsscheiben benützt werden, welche eine unsymmetrische Form aufweisen, um den Publikationsaufsatz senkrecht montieren zu können.

Die Erfindung ist anhand der Zeichnung beispielsweise näher erläutert, wobei

Figur 1    einen Aufriss eines erfindungsgemässen Publikationsständers,

Figur 1a und 1b    Seitenrisse der Ausgleichsvorrichtung für schräge Montagestellen,

Figur 2    einen Seitenriss und

Figur 3    einen Grundriss des Publikationsständers nach Figur 1 zeigen.

Figur 3a    zeigt die Anordnung eines Publikationsständers auf der Motorhaube eines Fahrzeuges,

Figur 4    zeigt einen Schrägriss des Publikationsständers nach Figur 1 und

Figur 5    zeigt einen rotationssymmetrischen Aufriss der Befestigungsvorrichtung mit integrierter Spannfeder.

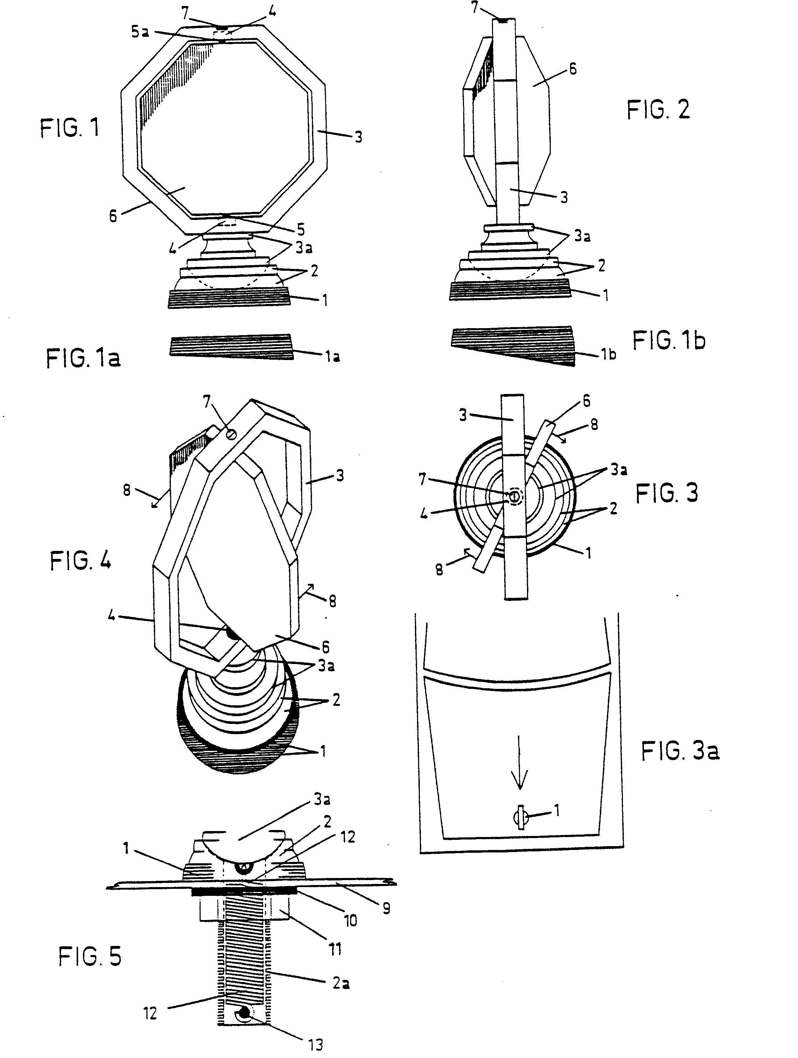

Die Figur 1 zeigt einen erfindungsgemässen Publikationsständer. Innerhalb eines Rahmens 3 ist ein Publikationsträger 6 in Form einer regelmässigen achteckigen Plexiglas- oder Leichtmetallscheibe mittels zweier in der Drehachse der Scheibe 6 angeordneten Stahlachsen 5 und 5a drehbar gehalten. Die Stahlachsen 5 und 5a sind in Kugellagern 4 geführt, welche zentriert oben und unten am Rahmen 3 angeordnet sind. Die obere Stahlachse 5a ist mittels einer Schraube 7 am Rahmen drehbar fixiert. Der Rahmen 3 ist auf einem Sockel befestigt, welcher nach Art eines Kugelgelenks, bestehend aus einem Kopf 3a und einer Pfanne 2, ausgebildet ist. Der Sockel ist unter Einfügung einer Gummischutzscheibe 1 auf einem Blechteil eines Fahrzeuges (nicht dargestellt) montiert.

Die Figuren 1a und 1b zeigen die Ausführung der Gummischutzscheibe als Ausgleichsvorrichtung für die Montage des Publikationsständers auf schrägen Flächen, wobei je nach Neigung der Montagefläche der Höhenunterschied zwischen gegenüberliegenden Seiten der Gummischutzscheibe angepasst ist.

Die Figuren 2, 3 und 4 zeigen den Publikationsständer nach Figur 1 von verschiedenen Seiten, wobei gleiche Teile mit gleichen Bezugszeichen versehen sind.

Die Pfeile 8 in den Figuren 3 und 4 deuten an, dass die Scheibe 6 drehbar ist.

Die Figur 3a zeigt die korrekte Anordnung des erfindungsgemässen Publikationsständers auf einer Motorhaube eines Fahrzeuges. Es ist ersichtlich, dass der Rahmen des Publikationsständers und die nicht dargestellte Rotationsachse des Publikationsträgers, welcher in dieser Darstellung mit dem Rahmen fluchtet, in einer Ebene liegen, und dass diese Ebene parallel zur Längsachse des Fahrzeuges ist. Nur bei dieser Ausrichtung ist gewährleistet, dass sich der Publikationsträger bei Fahrt im Rahmen dreht, da der Luftwiderstand in der Drehachse der Scheibe bzw. des Publikationsträgers von der Rahmeneinrichtung gebrochen wird.

Die Figur 5 zeigt eine Befestigungseinrichtung mit einer Spannfeder 12, welche den Kopf 3a gegen die Pfanne 2 spannt.

Die Pfanne 2 sitzt auf der Gummiprotektion 1 auf, die ihrerseits direkt auf dem Fahrzeug, dargestellt durch das Blech 9 der Motorhaube, aufliegt. Auf der Unterseite des Bleches 9 ist eine Unterlagsscheibe aus Gummi angeordnet, gegen die eine Befestigungsmutter 11 angestellt ist, welche ihrerseits auf einer rohrförmigen Halterungsbase 2a mit Aussengewinde aufgeschraubt ist.

Auf diese Weise sind die Teile 2, 2a, 10, 11 sowie der Halterungssteg 13 für die Spannfeder 12 fest mit dem Blech 9 verbunden, der Kopf 3a ist jedoch nur mittels der Spannfeder 12 gegen die Pfanne gespannt. Bei einem Stoss gegen den Publikationsständer kann der Kopf aus der Pfanne gleiten und wieder zurückgezogen werden, ohne dass irgendein fester Teil bricht.

## Patentansprüche

1. Anordnung eines Publikationsständers mit einem Publikationsaufsatz (3, 4, 5, 5a, 7) und einer Befestigungsvorrichtung (2, 2a, 10, 11, 13) für den Publikationsaufsatz auf einem Karosserieteil (9) eines Fahrzeuges, wobei der Publikationsaufsatz aus einer der Befestigungsvorrichtung verbundenen Rahmeneinrichtung (3) und einem innerhalb der Rahmeneinrichtung (3) rotierbar bzw. im Wind rotierend angeordneten Publikationsträger (6) besteht, dadurch gekennzeichnet, daß die Rahmeneinrichtung (3) und die Rotationsachse des Publikationsträgers in einer zur Längsachse des Fahrzeuges parallelen Ebene angeordnet sind, und daß der Publikationsständer in Bezug auf die obengenannte Ebene symmetrisch ist.

2. Anordnung nach Anspruch 1, dadurch gekennzeichnet, dass die Befestigungsvorrichtung eine Ausgleichsvorrichtung (1 ; 1a ; 1b) für schräge Montageflächen aufweist.

3. Anordnung nach Anspruch 1, dadurch gekennzeichnet, dass die Befestigungsvorrichtung eine Spannfeder (12) aufweist, mittels welcher die Rahmeneinrichtung kraftschlüssig auf dem Karosserieteil gehalten ist.

4. Anordnung nach Anspruch 1, dadurch gekennzeichnet, dass die Rahmeneinrichtung (3) zentrierte angeordnete Rotationslager (4) aufweist.

5. Anordnung nach Anspruch 4, dadurch gekennzeichnet, dass der Publikationsträger (6) Achsen (5) aufweist, welche in den Rotationslagern (4) geführt sind.

## Claims

1. Design of an advertisement holder with an advertisement mounting (3, 4, 5, 5a, 7) and a device (2, 2a, 10, 11, 13) for attaching the mounting to part of the bodywork (9) of a vehicle, the said mountingconsisting of a frame (3) connected to the attachment device and an advertisement backing plate (6) which can be made to revole or which revolves under wind power inside the frame (3), characterized in that the frame (3) and the axis of rotation of the advertisement backing plate are set on a plane parallel to the longitudinal axis of the vehicle, and in that the advertisement holder is symmetrical in relation to the said plane.

2. Design as in claim 1, characterized in that the attachment device comprises a compensation device (1, 1a, 1b) for attachment to inclined surfaces.

3. Design as in claim 1, characterized in that the attachment device comprises a spring under tension (12), by means of which the frame is held under friction pressure against the bodywork.

4. Design as in claim 1, characterized in that the frame (3) comprises centred rotary bearings (4).

5. Design as in claim 4, characterized in that the advertisement backing plate (6) comprises shafts (5) that are inserted in the rotary bearings (4).

## Revendications

1. Montage d'un support publicitaire avec châssis publicitaire (3, 4, 5, 5a, 7) et dispositif de fixation (2, 2a, 10, 11, 13) dudit châssis sur un point de la carrosserie (9) d'un véhicule automobile ; le châssis se compose d'un cadre (3) rattaché au dispositif de fixation et d'un support publicitaire rotatif (6) pouvant également se mettre en rotation sous l'effet du vent, fixé à l'intérieur du cadre ; le cadre (3) et l'axe de rotation du support publicitaire sont disposés dans un plan parallèle à l'axe longitudinal du véhicule, et le support est symétrique au plan susvisé.

2. Montage conforme à la spécification n° 1, conçu de telle sorte que le dispositif de fixation comporte un disque de compensation (1, 1a, 1b) pour les surfaces de montage obliques.

3. Montage conforme à la spécification n° 1, conçu de telle sorte que le dispositif de fixation comporte un ressort de tension (12) sous l'influence duquel le cadre est maintenu sur la carrosserie.

4. Montage conforme à la spécification n° 1, conçu de telle sorte que le cadre (3) comporte un roulement à billes (4) centré.

5. Montage conforme à la spécification n° 4, conçu de telle sorte que le support publicitaire (6) comporte des pivots (5) logés dans les roulements à billes (4).

FIG. 1

FIG. 2

FIG. 1a

FIG. 1b

FIG. 4

FIG. 3

FIG. 3a

FIG. 5